# EUROPEAN PATENT APPLICATION

(11) **EP 4 418 725 A1**
(43) Date of publication of application: **21.08.2024**
(21) Application number: 21960307.3
(22) Date of filing: 15.10.2021
(51) Int. Cl.: H04W 28/02

(54) **METHOD AND APPARATUS FOR SENDING OR RECEIVING CAPABILITY INDICATION INFORMATION, AND DEVICE AND MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Stöckeler, Ferdinand
(86) International application number: PCT/CN2021/124170
(87) International publication number: WO 2023/060576

(57) **Abstract**

Provided in the present invention are a method and apparatus for sending or receiving capability indication information, and a device and a storage medium, which are applied to the technical field of wireless communications. The method comprises: sending capability indication information to a network device, wherein the capability indication information is used for indicating whether a user equipment supports pre-configured measurement gap activation or deactivation. In the present invention, capability indication information is introduced, such that a network device can determine, on the basis of capability indication information sent by a user equipment, whether the user equipment supports pre-configured measurement gap activation or deactivation, thereby facilitating the network device determining whether there is a need to indicate to the user equipment (UE) that a pre-configured measurement gap is activated or deactivated, such that the UE determines the pre-configured measurement gap more clearly and accurately, and smoothly performs corresponding measurement control.

## Description

### FIELD

The present invention relates to the field of wireless communication technology, and more particularly to a method, apparatus, device and readable storage medium for sending or receiving capability indication information.

### BACKGROUND

Measurements are classified into an intra-frequency measurement and an inter-frequency measurement. The so-called intra-frequency measurement means that a serving cell where a user equipment (UE) is currently located and a target cell to be measured are on the same carrier frequency (center frequency). The inter-frequency measurement means that the serving cell where the UE is currently located and the target cell are not on the same carrier frequency.

3GPP proposed a measurement gap configuration, which is to reserve a part of time. During this period, the UE will not send or receive any data, but will adjust a receiver to a target cell frequency to perform the inter-frequency measurement, and then switches to a current serving cell when the measurement gap expires.

The UE may set the measurement gap to be activated or deactivated.

### SUMMARY

In view of this, the present invention provides a method, apparatus, device and readable storage medium for sending or receiving capability indication information.

According to a first aspect of embodiments of the present invention, a method for sending capability indication information is provided, which is performed by a UE and includes: sending the capability indication information to a network device. The capability indication information is configured to indicate whether the UE supports an activation or deactivation of a pre-configured measurement gap.

In embodiments of the present invention, the capability indication information is introduced, so that the network device may determine, based on the capability indication information sent by the UE, whether the UE supports the activation or deactivation of the pre-configured measurement gap, thereby facilitating the network device to determine whether it needs to instruct the UE to pre-configure the measurement gap to be activated or deactivated, so that the UE may clearly and accurately determine the pre-configured measurement gap and smoothly perform a corresponding measurement control.

In some possible implementations, the method further includes: receiving status indication information sent by the network device in a case where the capability indication information indicates that the UE supports the activation or deactivation of the pre-configured measurement gap, in which the status indication information is configured to indicate that the pre-configured measurement gap of the UE is activated or deactivated; and configuring the pre-configured measurement gap of the UE to be activated or deactivated based on the status indication information.

In some possible implementations, the method further includes: determining the pre-configured measurement gap of the UE to be activated or deactivated based on a measurement configuration of the UE in a case where the capability indication information indicates that the UE supports the activation or deactivation of the pre-configured measurement gap.

In some possible implementations, the method further includes: receiving status indication information sent by the network device in a case where the capability indication information indicates that the UE does not support the activation or deactivation of the pre-configured measurement gap, in which the status indication information is configured to indicate that the pre-configured measurement gap of the UE is activated or deactivated; and configuring the pre-configured measurement gap of the UE to be activated or deactivated based on the status indication information.

In some possible implementations, determining the pre-configured measurement gap of the UE to be activated or deactivated based on the measurement configuration of the UE includes triggering the UE to choose the pre-configured measurement gap of the UE to be activated or deactivated based on at least one of: a bandwidth part (BWP) switching; adding or deleting a measurement object; adding, releasing or changing a primary secondary cell; or activating or deactivating a secondary cell.

In some possible implementations, determining the pre-configured measurement gap of the UE to be activated or deactivated based on the measurement configuration of the UE includes at least one of: configuring the pre-configured measurement gap of the UE to be deactivated, in which all measurement carriers in the measurement configuration do not require a measurement gap; or configuring the pre-configured measurement gap of the UE to be activated, in which one of measurement carriers in the measurement configuration requires a measurement gap.

In a second aspect, a method for receiving capability indication information is provided, which is performed by a network device and includes: receiving the capability indication information sent by a UE. The capability indication information is configured to indicate whether the UE supports an activation or deactivation of a pre-configured measurement gap.

In some possible implementations, the method further includes: sending status indication information to the UE, or not sending status indication information to the UE in a case where the capability indication information indicates that the UE supports the activation or deactivation of the pre-configured measurement gap. The status indication information is configured to indicate that the pre-configured measurement gap of the UE is activated or deactivated.

In some possible implementations, the method further includes: sending status indication information to the UE in a case where the capability indication information indicates that the UE does not support the activation or deactivation of the pre-configured measurement gap. The status indication information is configured to indicate that the pre-configured measurement gap of the UE is activated or deactivated.

In some possible implementations, sending status indication information to the UE includes: sending a per-BWP signaling to the UE. The per-BWP signaling includes the status indication information.

In a third aspect, embodiments of the present invention provide a communication apparatus. The communication apparatus may be configured to perform steps performed by the UE in the above first aspect or any one of possible designs of the first aspect. The UE may implement each function in the above methods through a form of hardware structures, software modules, or hardware structures plus software modules.

When the communication apparatus shown in the third aspect is implemented through the software modules, the communication apparatus may include a transceiving module and a processing module coupled to each other. The transceiving module may be configured to support the communication apparatus to communicate, and the processing module may be configured by the communication apparatus to perform processing operations, such as generating information/messages that need to be sent, or processing received signals to obtain information/messages.

When performing the steps described in the first aspect, the transceiving module is configured to send capability indication information to a network device. The capability indication information is configured to indicate whether the UE supports an activation or deactivation of a pre-configured measurement gap.

In a fourth aspect, embodiments of the present invention provide a communication apparatus. The communication apparatus may be configured to perform steps performed by the network device in the above second aspect or any one of possible designs of the second aspect. The network device may implement each function in the above methods through a form of hardware structures, software modules, or hardware structures plus software modules.

When the communication apparatus shown in the fourth aspect is implemented through the software modules, the communication apparatus may include a transceiving module and a processing module coupled to each other. The transceiving module may be configured to support the communication apparatus to communicate, and the processing module may be configured by the communication apparatus to perform processing operations, such as generating information/messages that need to be sent, or processing received signals to obtain information/messages.

When performing the steps described in the second aspect, the transceiving module is configured to receive capability indication information sent by a UE. The capability indication information is configured to indicate whether the UE supports an activation or deactivation of a pre-configured measurement gap.

In a fifth aspect, the present invention provides a communication system, which may include the communication apparatus shown in the third aspect and the communication apparatus shown in the fourth aspect. The communication apparatus shown in the third aspect may be composed of software modules and/or hardware components. The communication apparatus shown in the fourth aspect may be composed of the software modules and/or the hardware components.

In a sixth aspect, the present invention provides a communication device, which includes a processor and a memory configured to store computer programs. The processor is configured to execute the computer programs to implement the first aspect or any one of possible designs of the first aspects.

In a seventh aspect, the present invention provides a communication device, which includes a processor and a memory configured to store computer programs. The processor is configured to execute the computer programs to implement the second aspect or any one of possible designs of the second aspects.

In an eighth aspect, the present invention provides a computer-readable storage medium having stored therein instructions (or computer programs, or programs) that, when invoked by a computer, cause the computer to execute the above first aspect or any one of possible designs of the first aspect.

In a ninth aspect, the present invention provides a computer-readable storage medium having stored therein instructions (or computer programs, or programs) that, when invoked by a computer, cause the computer to execute the above second aspect or any one of possible designs of the second aspect.

For the beneficial effects in the above second to ninth aspects and possible designs thereof, reference may be made to the descriptions of the beneficial effects of the method in the first aspect and any one of possible designs thereof.

It is to be understood that both the foregoing general description and the following detailed description are illustrative and explanatory only and shall not be construed to limit the present invention.

### BRIEF DESCRIPTION OF THE DRAWINGS

The accompanying drawings described here are used to provide a further understanding of embodiments of the present invention and constitute a part of the present invention. Illustrative examples of embodiments of the present invention and their descriptions are used to explain the embodiments of the present invention and shall not be construed to limit the embodiments of the present invention.

The accompanying drawings, which are incorporated in and constitute a part of this specification, illustrate embodiments consistent with the present invention and, together with the description, serve to explain the principles of the embodiments of the present invention.
FIG. 1 is a schematic diagram showing a communication system according to an illustrative embodiment;
FIG. 2 is a flow chart showing a transmission of capability indication information according to an illustrative embodiment;
FIG. 3 is a block diagram showing an apparatus for sending capability indication information according to an illustrative embodiment;
FIG. 4 is a block diagram showing a device for sending capability indication information according to an illustrative embodiment;
FIG. 5 is a block diagram showing an apparatus for receiving capability indication information according to an illustrative embodiment; and
FIG. 6 is a block diagram showing a device for receiving capability indication information according to an illustrative embodiment.

### DETAILED DESCRIPTION

Embodiments of the present invention will now be further described in connection with the accompanying drawings and specific implementations.

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present invention. Instead, they are merely examples of apparatuses and methods consistent with some aspects related to the present invention as recited in the appended claims.

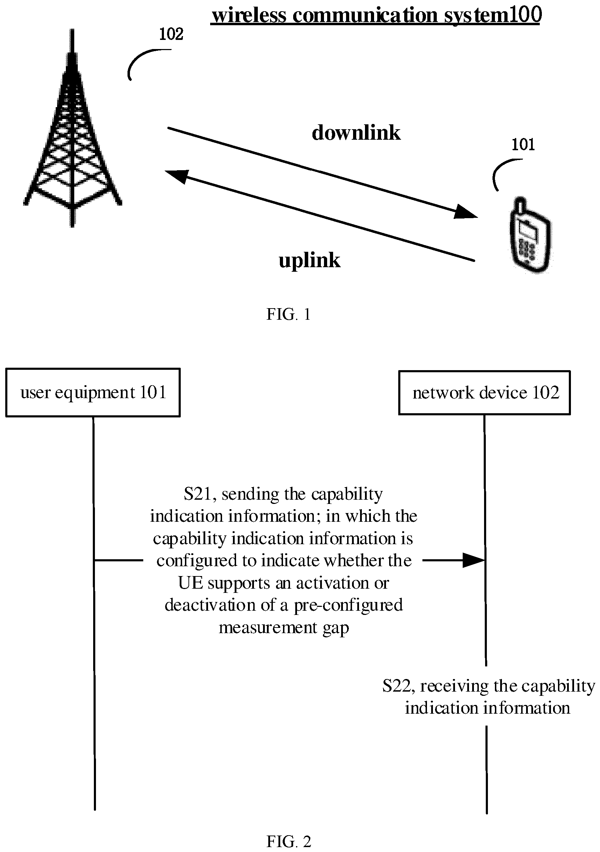

As shown in FIG. 1, FIG. 1 is a schematic diagram showing a communication system according to an illustrative embodiment. The method for sending capability indication information provided by an embodiment of the present invention may be performed by a wireless communication system 100, which may include a UE 101 and a network device 102. The UE 101 is configured to support a carrier aggregation, and the UE 101 may be connected to a plurality of carrier units of the network device 102. The plurality of carrier units includes one primary carrier unit and one or more secondary carrier units.

It should be understood that the above wireless communication system 100 may be applied to both low-frequency scenarios and high-frequency scenarios. Application scenarios of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future fifth-generation (5th-generation, 5G) system, a new radio (NR) communication system or a future evolved public land mobile network (PLMN) system, etc.

The UE 101 shown above may be a terminal, an access terminal, a terminal unit, a terminal station, a mobile station (MS), a remote station, a remote terminal, a mobile terminal, a wireless communication device, a terminal agent or a UE, etc. The UE 101 may be equipped with a wireless transceiving function, which may perform a communication (such as a wireless communication) with one or more network devices of one or more communication systems, and accepts network services provided by the network devices. The network devices herein include, but are not limited to, the illustrated network device 102.

The UE 101 may be a cellular phone, a cordless phone, a session initiation protocol (SIP) phone, a wireless local loop (WLL) station, a personal digital assistant (PDA) device, a handheld device with wireless communication functions, a computing device or other processing devices connected to wireless modems, a vehicle-mounted device, a wearable device, a UE in a future 5G network or a UE in a future evolved public land mobile communication network (PLMN), etc.

The network device 102 may be an access network device (or an access network station). The access network device refers to a device that provides network access functions, such as a radio access network (RAN) base station and so on. The network device 102 may specifically include a base station (BS), or includes a base station and a wireless resource management device for controlling the base station, etc. The network device 102 may also include a relay station (a relay device), an access point, and a base station in the future 5G network, a base station in the future evolved PLMN, or an NR base station, etc. The network device 102 may be the wearable device or the vehicle-mounted device. The network device 102 may also be a communication chip with a communication module.

For example, the network device 102 includes, but is not limited to, a next-generation base station (gnodeB, gNB) in 5G, an evolved node B (eNB) in an LTE system, a radio network controller (RNC), a node B (NB) in a wideband code division multiple access (WCDMA) system, a wireless controller under a CRAN system, a base station controller (BSC), a base transceiver station (BTS) in a global system for mobile communication (GSM) system or code division multiple access (CDMA) system, a home base station (for example, a home evolved nodeB, or a home node B (HNB)), a baseband unit (BBU), a transmitting and receiving point (TRP), a transmitting point (TP) or a mobile switching center, etc.

Embodiments of the present invention provide a method for sending capability indication information. Referring to FIG. 2, FIG. 2 is a flow chart showing a method for sending the capability indication information according to an illustrative embodiment. As shown in FIG. 2, the method includes the following steps.

In block S21, a UE 101 sends capability indication information to a network device 102.

In block S22, the network device 102 receives the capability indication information from the UE 101.

The capability indication information is configured to indicate whether the UE supports an activation or deactivation of a pre-configured measurement gap.

Measurement gap configuration information may include one or more gaps, and may further include measurement carriers corresponding to individual gaps. The gap may be pre-configured or dynamically configured by the network device. The gap may include a measurement gap length (MGL), a measurement gap repetition period (MGRP), and a measurement offset (gapOffset) used to configure a starting position of the gap.

When a gap corresponding to the measurement carrier is activated, the measurement carrier is measured. When the gap corresponding to the measurement carrier is deactivated, the measurement carrier is not measured.

In the step in block S22, after receiving the capability indication information, the network device may determine whether the UE supports the activation or deactivation of the pre-configured measurement gap.

In some possible implementations, the network device does not need to instruct the UE whether to support the activation or deactivation of the pre-configured measurement gap in a case where the network device determines that the UE supports the activation or deactivation of the pre-configured measurement gap, and in this case the UE is able to make the determination by itself to avoid an unnecessary exchange of information and reduce an occupancy of resources. The resources may also be called transmission resources, including any one of or a combination of time domain resources, frequency domain resources, time-frequency resources or space domain resources.

In embodiments of the present invention, the capability indication information is introduced, so that the network device may determine, based on the capability indication information sent by the UE, whether the UE supports the activation or deactivation of the pre-configured measurement gap, thereby facilitating the network device to determine whether it needs to instruct the UE to pre-configure the measurement gap to be activated or deactivated, so that the UE may clearly and accurately determine the pre-configured measurement gap and smoothly perform a corresponding measurement control.

Embodiments of the present invention provide a method for sending capability indication information, which is performed by a UE and includes: S31a, sending the capability indication information to a network device.

The capability indication information is configured to indicate whether the UE supports an activation/deactivation of a pre-configured measurement gap or not.

The S31a may include at least one of: in manner 1, sending a signaling of IEMeasAndMobParameters to the network device; in manner 2, sending a signaling of IEMeasAndMobParameterssMRDC to the network device.

In the manner 1, the signaling of IEMeasAndMobParameters includes the capability indication information.

In the manner 2, the signaling of IEMeasAndMobParametersMRDC includes the capability indication information.

"MeasAndMobParameters" refers to measurement and mobility parameters, and "IE" refers to information elements. IEMeasAndMobParameters may be used to deliver radio device capabilities related to measurements for a radio resource management (RRM), a radio link monitoring (RLM), and a mobility (such as a handover). Therefore, the capability indication information may be set in the IEMeasAndMobParameters signaling and the IEMeasAndMobParameterssMRDC signaling.

In embodiments of the present invention, the capability indication information is introduced, so that the network device may determine, based on the capability indication information sent by the UE, whether the UE supports the activation/deactivation of the pre-configured measurement gap or not, thereby facilitating the network device to determine whether it needs to instruct the UE to pre-configure the measurement gap to be activated or deactivated, so that the UE may clearly and accurately determine the pre-configured measurement gap and smoothly perform the corresponding measurement control.

Embodiments of the present invention provide a method for sending capability indication information, which is performed by a UE and includes: in S31b, sending the capability indication information to a network device; in S32b, receiving status indication information sent by the network device in a case where the capability indication information indicates that the UE supports activation or deactivation of a pre-configured measurement gap, in which the status indication information is configured to indicate that the pre-configured measurement gap of the UE is activated or deactivated; and in S33b, configuring the pre-configured measurement gap of the UE to be activated or deactivated based on the status indication information.

In S31b, the capability indication information is configured to indicate that the UE supports the activation or deactivation of the pre-configured measurement gap.

In S32b, after the network device determines that the UE supports the activation or deactivation of the pre-configured measurement gap, the network device may still send the status indication information to the UE.

In some possible implementations, the status indication information may be set in a per-BWP signaling. That is, the network device may send the per-BWP signaling to the UE, the per-BWP signaling includes the status indication information, and the UE receives the status indication information.

In some possible implementations, in S33b, in case that the UE supports the activation or deactivation of the pre-configured measurement gap, and the UE receives the status indication information from the network device, theoretically, the UE may configure the pre-configured measurement gap of the UE to be activated or deactivated by either of the two following manners.

In manner 1, the UE may determine to configure the pre-configured measurement gap of the UE to be activated or deactivated based on the status indication information.

In manner 2, the UE may independently determine to configure the pre-configured measurement gap of the UE to be activated or deactivated.

In some possible implementations, a priority of the manner 1 is higher than a priority of the manner 2 by default. The UE may determine to configure the pre-configured measurement gap of the UE to be activated or deactivated based on the status indication information.

In some possible implementations, the status indication information received from the network device may be used to indicate one of or a combination of: one or more BWP measurement gaps, BWP IDs corresponding to individual measurement gaps, or gap pattern Ids corresponding to individual measurement gaps.

In embodiments of the present invention, the UE may configure the pre-configured measurement gap of the UE to be activated or deactivated based on the status indication information in the case where the UE supports the activation or deactivation of the pre-configured measurement gap and the UE receives the status indication information from the network device. In this way, it may prevent the UE from being unable to determine which manner to use to configure the pre-configured measurement gap of the UE to be activated or deactivated.

Embodiments of the present invention provide a method for sending capability indication information, which is performed by a UE and includes: in S31c, sending the capability indication information to a network device; and in S32c, determining a pre-configured measurement gap of the UE to be activated or deactivated based on a measurement configuration of the UE in a case where the capability indication information indicates that the UE supports activation or deactivation of the pre-configured measurement gap.

In S32c, the capability indication information indicates that the UE supports the activation or deactivation of the pre-configured measurement gap. After the network device determines that the UE supports the activation or deactivation of the pre-configured measurement gap, the network device may no longer send the status indication information to the UE.

In S32c, since the UE does not receive status indication information sent by the network device, the UE supports the activation or deactivation of the pre-configured measurement gap. Therefore, the UE may independently determine the pre-configured measurement gap of the UE to be activated or deactivated.

When the UE independently determines to configure the pre-configured measurement gap of the UE to be activated or deactivated, a measurement configuration needs to be used, and the measurement configuration may be sent to the UE by the network device.

In some possible implementations, after the UE sends the capability indication information to the network device, the UE may determine the pre-configured measurement gap of the UE to be activated or deactivated based on the measurement configuration in a case where the status indication information sent by the network device is not received within a set duration. The duration is set according to actual needs.

In embodiments of the present invention, after the network device receives the capability indication information, the network device does not need to send the status indication information to the UE in the case where the UE supports the activation or deactivation of the pre-configured measurement gap. The UE may independently determine the pre-configured measurement gap of the UE to be activated or deactivated based on the measurement configuration, thus saving resources.

Embodiments of the present invention provide a method for sending capability indication information, which is performed by a UE and includes: in S31d, sending the capability indication information to a network device; in S32d, receiving status indication information sent by the network device in a case where the capability indication information indicates that the UE does not support an activation or deactivation of a pre-configured measurement gap, in which the status indication information is configured to indicate that the pre-configured measurement gap of the UE is activated or deactivated; and in S33d, configuring the pre-configured measurement gap of the UE to be activated or deactivated based on the status indication information.

In S31d, the capability indication information is configured to indicate that the UE does not support the activation or deactivation of the pre-configured measurement gap.

In S32d, since the UE does not support the activation or deactivation of the pre-configured measurement gap, the UE may receive the status indication information from the network device after sending the capability indication information to the network device.

In embodiments of the present invention, when the UE does not support the activation or deactivation of the pre-configured measurement gap, the UE may receive the status indication information from the network device to configure the pre-configured measurement gap of the UE to be activated or deactivated based on the status indication information.

Embodiments of the present invention provide a method for sending capability indication information, which is performed by a UE and includes: in S31f, sending the capability indication information to a network device; in S32f, responding to the UE supporting an activation or deactivation of a pre-configured measurement gap; and in S33f, determining a pre-configured measurement gap of the UE to be activated or deactivated based on measurement configuration of the UE when a trigger condition is met.

In S31f, the capability indication information is configured to indicate that the pre-configured measurement gap of the UE is determined to be activated or deactivated based on the measurement configuration of the UE.

In S33f, the UE is triggered to choose the pre-configured measurement gap of the UE to be activated or deactivated based on at least one of: a bandwidth part (BWP) switching; adding or deleting a measurement object; adding, releasing or changing a primary secondary cell; or activating or deactivating a secondary cell.

In this method, the UE may be triggered to independently determine the pre-configured measurement gap of the UE to be activated or deactivated in the case where any trigger condition is met.

In embodiments of the present invention, the trigger condition is set for a user to independently determine the pre-configured measurement gap of the UE to be activated or deactivated, to prevent the UE from frequently determining the pre-configured measurement gap of the UE to be activated or deactivated, thus saving resources.

Embodiments of the present invention provide a method for sending capability indication information, which is performed by a UE and includes: in S31e, sending the capability indication information to a network device; in S32e, responding to the UE supporting an activation or deactivation of a pre-configured measurement gap; and in S33e, determining the pre-configured measurement gap of the UE to be activated or deactivated based on measurement configuration of the UE.

In S3le, the capability indication information is configured to indicate the UE to determine the pre-configured measurement gap of the UE to be activated or deactivated based on the measurement configuration of the UE.

In S33e, determining the pre-configured measurement gap of the UE to be activated or deactivated based on the measurement configuration of the UE includes at least one of: in manner 1, configuring the pre-configured measurement gap of the UE to be deactivated, in which all measurement carriers in the measurement configuration do not require a measurement gap; or in manner 2, configuring the pre-configured measurement gap of the UE to be activated, in which one of measurement carriers in the measurement configuration requires a measurement gap.

In this method, the UE determines the pre-configured measurement gap to be deactivated or activated based on the measurement configuration. If all measurement carriers do not require the measurement gap, it means that individual measurement carriers do not need to be measured, and the pre-configured measurement gap of the UE may be configured to be deactivated. If one or more measurement carriers require the measurement gap, it means that there is one or more measurement carriers that need to be measured, and the pre-configured measurement gap of the UE is configured to be activated.

In embodiments of the present invention, when the UE supports the activation or deactivation of the pre-configured measurement gap, the UE may independently configure the pre-configured measurement gap of the UE to be activated or deactivated based on whether the measurement carriers in the measurement configuration require the measurement gap. In this way, the status indication information from the network device is not needed, thus saving resources.

Embodiments of the present invention provide a method for receiving capability indication information, which is performed by a network device and includes: in S41a, receiving the capability indication information from a UE. The capability indication information is configured to indicate whether the UE supports an activation or deactivation of a pre-configured measurement gap.

The S41a may include at least one of: in manner 1, receiving a signaling of IEMeasAndMobParameters from the UE; in manner 2, receiving a signaling of IEMeasAndMobParametersMRDC from the UE.

In the manner 1, the signaling of IEMeasAndMobParameters includes the capability indication information.

In the manner 2, the signaling of IEMeasAndMobParametersMRDC includes the capability indication information.

"MeasAndMobParameters" refers to measurement and mobility parameters, and "IE" refers to information elements. IEMeasAndMobParameters may be used to deliver radio device capabilities related to measurements for a radio resource management (RRM), a radio link monitoring (RLM), and a mobility (such as a handover). Therefore, the capability indication information may be set in the IEMeasAndMobParameters signaling and the IEMeasAndMobParameterssMRDC signaling.

In embodiments of the present invention, the capability indication information is introduced, so that the network device may determine, based on the capability indication information sent by the UE, whether the UE supports the activation/deactivation of the pre-configured measurement gap or not, thereby facilitating the network device to determine whether it needs to instruct the UE to pre-configure the measurement gap to be activated or deactivated, so that the UE may clearly and accurately determine the pre-configured measurement gap and smoothly perform the corresponding measurement control.

Embodiments of the present invention provide a method for receiving capability indication information, which is performed by a network device and includes: in S41b, receiving the capability indication information from a UE; and in S42b, sending status indication information to the UE, or not sending status indication information to the UE in a case where the capability indication information indicates that the UE supports an activation or deactivation of a pre-configured measurement gap. The status indication information is configured to indicate that the pre-configured measurement gap of the UE is activated or deactivated.

In S41b, the capability indication information is configured to indicate that the UE supports the activation or deactivation of the pre-configured measurement gap.

In S42b, in a case where the UE supports the activation or deactivation of the pre-configured measurement gap, and the UE receives the status indication information from the network device, theoretically, the UE may configure the pre-configured measurement gap of the UE to be activated or deactivated by either of the two following manners.

In manner 1, the UE may determine to configure the pre-configured measurement gap of the UE to be activated or deactivated based on the status indication information.

In manner 2, the UE may independently determine to configure the pre-configured measurement gap of the UE to be activated or deactivated.

In some possible implementations, a priority of the manner 1 is higher than a priority of the manner 2 by default. The UE may determine to configure the pre-configured measurement gap of the UE to be activated or deactivated based on the status indication information.

In a possible implementation, sending the status indication information to the UE may include: sending a per-BWP signaling to the UE.

The per-BWP signaling includes the status indication information. That is, the status indication information may be set in the per-BWP signaling. The network device sends the per-BWP signaling carrying the status indication information to the UE, to make the UE receive the status indication information.

Embodiments of the present invention provide a method for receiving capability indication information, which is performed by a network device and includes: in S41c, receiving the capability indication information from a UE; and in S42c, sending status indication information to the UE in a case where the capability indication information indicates that the UE does not support an activation or deactivation of a pre-configured measurement gap. The status indication information is configured to indicate that the pre-configured measurement gap of the UE is activated or deactivated.

In some possible implementations, in S41c, the capability indication information is configured to indicate that the UE does not support the activation or deactivation of the pre-configured measurement gap.

In some possible implementations, in S42c, after the network device receives the capability indication information, the network device may send the status indication information to the UE in response to the UE supporting the activation or deactivation of the pre-configured measurement gap, so that the UE may determine the pre-configured measurement gap of the UE to be activated or deactivated based on the status indication information.

Sending the status indication information to the UE may include: sending a per-BWP signaling to the UE. The per-BWP signaling includes the status indication information.

Based on the same concept as the above method embodiments, embodiments of the present invention further provide a communication apparatus, which may have the functions of the UE in the above method embodiments, and may be used to perform the steps provided by the above method embodiments to be performed by the UE. The functions may be implemented by a hardware, or may be implemented by a software or a hardware executing a corresponding software. The hardware or software includes one or more modules corresponding to the above functions.

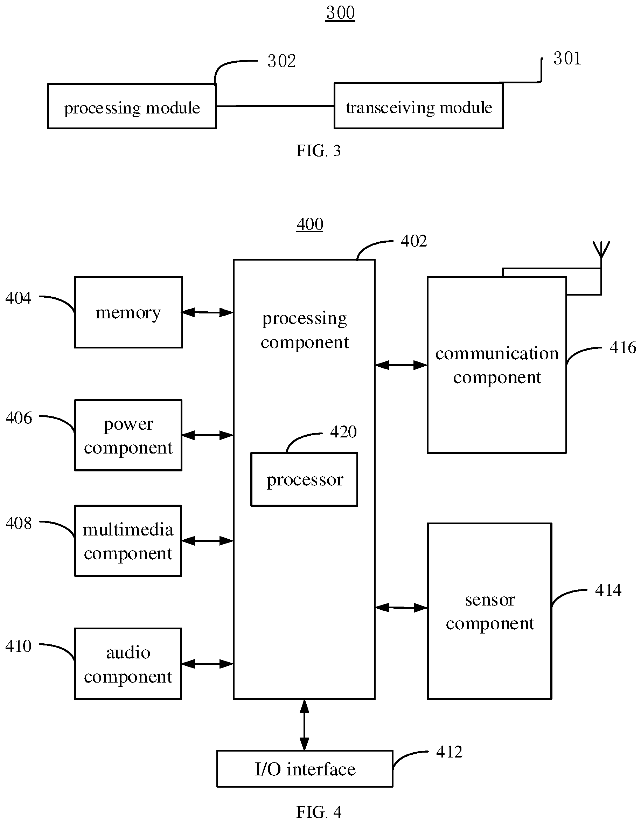

In a possible implementation, a communication apparatus 300 shown in FIG. 3 may serve as the UE involved in the above method embodiments, and perform the steps performed by the UE in the above method embodiments. As shown in FIG. 3, the communication apparatus 300 may include a transceiving module 301 and a processing module 302, and the transceiving module 301 and the processing module 302 are coupled to each other. The transceiving module 301 may be configured to support the communication apparatus 300 to perform a communication. The transceiving module 301 may have a wireless communication function, for example, it may perform a wireless communication with other communication devices via a wireless air interface. The processing module 302 may be configured to support the communication apparatus 300 to perform the processing actions in the above method embodiments, including but not limited to: generating information and messages sent by the transceiving module 301, and/or demodulating and decoding signals received by the transceiving module 301, and so on.

When performing the steps implemented by the UE, the transceiving module 301 is configured to send capability indication information to a network device. The capability indication information is configured to indicate whether the UE supports an activation or deactivation of a pre-configured measurement gap.

When a communication device is a UE, its structure may also be as shown in FIG. 4. The device 400 may be a mobile phone, a computer, a digital broadcast terminal, a messaging device, a game console, a tablet device, a medical device, a fitness device, a personal digital assistant, or the like.

Referring to FIG. 4, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the device 400, such as the operations associated with display, phone calls, data communications, camera operations, and recording operations. The processing component 402 can include one or more processors 420 to execute instructions to perform all or some of the steps in the above-described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, videos, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a front camera and/or a rear camera. The front camera and/or the rear camera may receive an external multimedia datum while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone (MIC) configured to receive an external audio signal when the device 400 is in an operation mode, such as a call mode, a recording mode, and a voice recognition mode. The received audio signal may be further stored in the memory 404 or sent via the communication component 416. In some embodiments, the audio component 410 further includes a speaker to output audio signals.

The I/O interface 412 provides an interface between the processing component 402 and peripheral interface modules, such as keyboards, click wheels, buttons, and the like. The buttons may include, but are not limited to, a home button, a volume button, a starting button, and a locking button.

The sensor component 414 includes one or more sensors to provide status assessments of various aspects of the device 400. For instance, the sensor component 414 may detect an open/closed status of the device 400, relative positioning of components, e.g., the display and the keypad, of the device 400. The sensor component 414 may also detect a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may further include a light sensor, such as a CMOS or CCD image sensor, for use in imaging applications. In some embodiments, the sensor component 414 may further include an accelerometer sensor, a gyroscope sensor, a magnetic sensor, a pressure sensor, or a temperature sensor.

The communication component 416 is configured to facilitate communication, wired or wireless, between the device 400 and other devices. The device 400 can access a wireless network based on a communication standard, such as WiFi, 2G or 3G or a combination thereof. In an illustrative embodiment, the communication component 416 receives a broadcast signal or broadcast associated information from an external broadcast management system via a broadcast channel. In an illustrative embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above method.

In an illustrative embodiment, there is also provided a non-transitory computer readable storage medium including instructions, such as included in the memory 404, executable by the processor 420 in the device 400, for completing the above method. For example, the non-transitory computer-readable storage medium may be a ROM, a random access memory (RAM), a compact disc read only memory (CD-ROM), a magnetic tape, a floppy disc, an optical data storage device, and the like.

Based on the same concept as the above method embodiments, embodiments of the present invention also provide a communication apparatus, which may have the functions of the network device in the above method embodiments, and may be used to perform the steps provided by the above method embodiments to be performed by the network device. The functions may be implemented by a hardware, or may be implemented by a software or a hardware executing a corresponding software. The hardware or software includes one or more modules corresponding to the above functions.

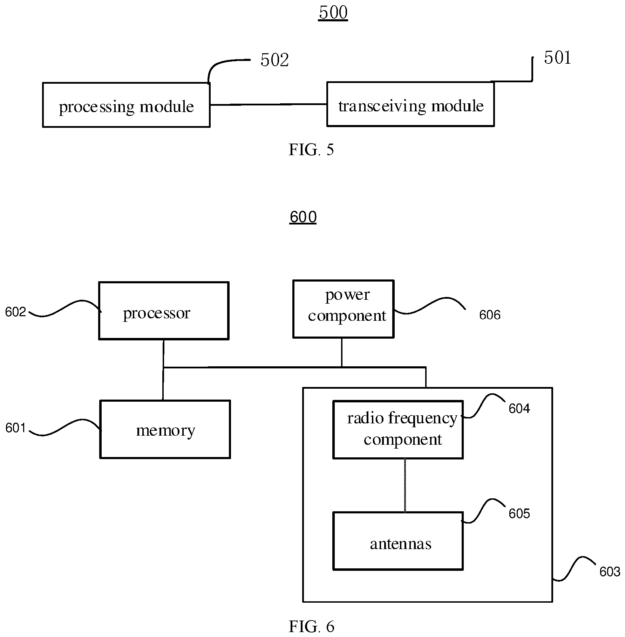

In a possible implementation, a communication apparatus 500 shown in FIG. 5 may serve as the network device involved in the above method embodiments, and perform the steps performed by the network device in the above method embodiments. As shown in FIG. 5, the communication apparatus 500 may include a transceiving module 501 and a processing module 502, and the transceiving module 501 and the processing module 502 are coupled to each other. The transceiving module 501 may be configured to support the communication apparatus 500 to perform a communication. The transceiving module 501 may have a wireless communication function, for example, it may perform a wireless communication with other communication devices via a wireless air interface. The processing module 502 may be configured to support the communication apparatus 500 to perform the processing actions in the above method embodiments, including but not limited to: generating information and messages sent by the transceiving module 501, and/or demodulating and decoding signals received by the transceiving module 501, and so on.

When performing the steps implemented by a network device, the transceiving module 501 is configured to receive capability indication information sent by a UE. The capability indication information is configured to indicate whether the UE supports an activation or deactivation of a pre-configured measurement gap.

When a communication device is a network device, its structure may also be as shown in FIG. 6. Taking a base station as an example to illustrate a structure of the communication device. As shown in FIG. 6, the device 560 includes a memory 601, a processor 602, a transceiving component 603, and a power component 606. The memory 601 is coupled with the processor 602 and may be used to store programs and data necessary for the communication device 600 to implement various functions. The processor 602 is configured to support the communication device 600 to perform corresponding functions in the above methods, and the functions may be implemented by invoking programs stored in the memory 601. The transceiving component 603 may be a wireless transceiver, which may be used to support the communication device 600 to receive signaling and/or data and to send the signaling and/or the data through a wireless air interface. The transceiving component 603 may also be called a transceiving unit or a communication unit. The transceiving component 603 may include a radio frequency component 604 and one or more antennas 605. The radio frequency component 604 may be a remote radio unit (RRU), and may be specifically used for a transmission of radio frequency signals and a conversion of the radio frequency signals and baseband signals. The one or more antennas 606 may be specifically used for transmitting and receiving the radio frequency signals.

When the communication device 600 needs to send the data, the processor 602 may perform a baseband processing on data to be sent, and then output the baseband signals to a radio frequency unit. The radio frequency unit performs a radio frequency processing on the baseband signals and then sends the radio frequency signals in a form of electromagnetic waves through the antenna. When the data is sent to the communication device 600, the radio frequency unit receives the radio frequency signals through the antenna, converts the radio frequency signals into baseband signals, and outputs the baseband signals to the processor 602. The processor 602 converts the baseband signals into data and processes the data.

In an illustrative embodiment, there is also provided a non-transitory computer-readable storage medium including instructions, such as a memory 601 including the instructions. The above instructions may be executed by the processor 602 of the device 600 to complete the above methods. For example, the non-transitory computer-readable storage medium may be an ROM, a random access memory (RAM), a CD-ROM, a magnetic tape, a floppy disk, and an optical data storage device, etc.

Other implementations of embodiments of the present invention will be apparent to those skilled in the art from consideration of the specification and practice of the present invention disclosed here. The present invention is intended to cover any variations, uses, or adaptations of embodiments of the present invention following the general principles thereof and including such departures from embodiments of the present invention as come within known or customary practice in the art. It is intended that the specification and examples be considered as exemplary only, with a true scope and spirit of embodiments of the present invention being indicated by the following claims.

It will be appreciated that embodiments of the present invention is not limited to the exact construction that has been described above and illustrated in the accompanying drawings, and that various modifications and changes can be made without departing from the scope thereof. It is intended that the scope of embodiments of the present invention only be limited by the appended claims.

### Industrial applicability

The capability indication information is introduced, so that the network device may determine, based on the capability indication information sent by the UE, whether the UE supports the activation/deactivation of the pre-configured measurement gap or not, thereby facilitating the network device to determine whether it needs to instruct the UE to pre-configure the measurement gap to be activated or deactivated, so that the UE may clearly and accurately determine the pre-configured measurement gap and smoothly perform the corresponding measurement control.

## Claims

1. A method for sending capability indication information, performed by a user equipment, UE, comprising:
sending the capability indication information to a network device; wherein the capability indication information is configured to indicate whether the UE supports an activation or deactivation of a pre-configured measurement gap.

2. The method according to claim 1, further comprising:
receiving status indication information sent by the network device in a case where the capability indication information indicates that the UE supports the activation or deactivation of the pre-configured measurement gap; wherein the status indication information is configured to indicate that the pre-configured measurement gap of the UE is activated or deactivated; and
configuring the pre-configured measurement gap of the UE to be activated or deactivated based on the status indication information.

3. The method according to claim 1, further comprising:
determining the pre-configured measurement gap of the UE to be activated or deactivated based on a measurement configuration of the UE in a case where the capability indication information indicates that the UE supports the activation or deactivation of the pre-configured measurement gap.

4. The method according to claim 1, further comprising:
receiving status indication information sent by the network device in a case where the capability indication information indicates that the UE does not support the activation or deactivation of the pre-configured measurement gap; wherein the status indication information is configured to indicate that the pre-configured measurement gap of the UE is activated or deactivated; and
configuring the pre-configured measurement gap of the UE to be activated or deactivated based on the status indication information.

5. The method according to claim 3, wherein determining the pre-configured measurement gap of the UE to be activated or deactivated based on the measurement configuration of the UE comprises triggering the UE to choose the pre-configured measurement gap of the UE to be activated or deactivated based on at least one of:
a bandwidth part, BWP, switching;
adding or deleting a measurement object;
adding, releasing or changing a primary secondary cell; or
activating or deactivating a secondary cell.

6. The method according to claim 3, wherein
determining the pre-configured measurement gap of the UE to be activated or deactivated based on the measurement configuration of the UE comprises at least one of:
configuring the pre-configured measurement gap of the UE to be deactivated, wherein all measurement carriers in the measurement configuration do not require a measurement gap; or
configuring the pre-configured measurement gap of the UE to be activated, wherein one of measurement carriers in the measurement configuration requires a measurement gap.

7. A method for receiving capability indication information, performed by a network device, comprising:
receiving the capability indication information sent by a UE; wherein the capability indication information is configured to indicate whether the UE supports an activation or deactivation of a pre-configured measurement gap.

8. The method according to claim 7, further comprising:
sending status indication information to the UE, or not sending status indication information to the UE in a case where the capability indication information indicates that the UE supports the activation or deactivation of the pre-configured measurement gap; wherein the status indication information is configured to indicate that the pre-configured measurement gap of the UE is activated or deactivated.

9. The method according to claim 7, further comprising:
sending status indication information to the UE in a case where the capability indication information indicates that the UE does not support the activation or deactivation of the pre-configured measurement gap; wherein the status indication information is configured to indicate that the pre-configured measurement gap of the UE is activated or deactivated.

10. The method according to claim 7, wherein
sending status indication information to the UE comprises:
sending a per-BWP signaling to the UE; wherein the per-BWP signaling comprises the status indication information.

11. A communication apparatus, comprising:
a transceiving module configured to send capability indication information to a network device; wherein the capability indication information is configured to indicate whether a UE supports an activation or deactivation of a pre-configured measurement gap.

12. A communication apparatus, comprising:
a transceiving module configured to receive capability indication information sent by a UE; wherein the capability indication information is configured to indicate whether the UE supports an activation or deactivation of a pre-configured measurement gap.

13. A communication device, comprising:
a processor; and
a memory configured to store computer programs;
wherein the processor is configured to execute the computer programs to implement the method according to any one of claims 1 to 6.

14. A communication device, comprising:
a processor; and
a memory configured to store computer programs;
wherein the processor is configured to execute the computer programs to implement the method according to any one of claims 7 to 10.

15. A computer-readable storage medium, having stored therein instructions that, when invoked by a computer, cause the computer to execute the method according to any one of claims 1 to 6.

16. A computer-readable storage medium, having stored therein instructions that, when invoked by a computer, cause the computer to execute the method according to any one of claims 7 to 10.
